Europäisches Patentamt

European Patent Office

Office européen des brevets

(11) Veröffentlichungsnummer : **0 147 636**
**B1**

# (12) EUROPÄISCHE PATENTSCHRIFT

(45) Veröffentlichungstag der Patentschrift :
05.04.89

(21) Anmeldenummer : 84114212.8

(22) Anmeldetag : 24.11.84

(51) Int. Cl.⁴ : **C 23 F 15/00**, B 01 D 53/02,
B 08 B 17/00

(54) Verfahren zum Verhindern der Bildung schwer entfernbarer Ablagerungen in Abhitze-Rückgewinnungsanlagen von Glasöfen, insbesondere von Wasserglasöfen.

(30) Priorität : 02.12.83 DE 3343639

(43) Veröffentlichungstag der Anmeldung :
10.07.85 Patentblatt 85/28

(45) Bekanntmachung des Hinweises auf die Patenterteilung : 05.04.89 Patentblatt 89/14

(84) Benannte Vertragsstaaten :
DE FR GB NL

(56) Entgegenhaltungen :
FR—A— 1 548 183
GB—A— 2 048 932
US—A— 4 245 573

(73) Patentinhaber : Henkel Kommanditgesellschaft auf
Aktien
Postfach 1100 Henkelstrasse 67
D-4000 Düsseldorf-Holthausen (DE)

(72) Erfinder : Hempel, Hans-Ulrich, Dr.
Wiesengrund 5
D-5063 Overath-Vilkerath (DE)
Erfinder : Novotny, Rudolf, Dr.
Am Rittersberg 14
D-4000 Düsseldorf 13 (DE)
Erfinder : Staller, Siegfried
Bendenkamp 16
D-4010 Ratingen 1 (DE)
Erfinder : Krämer, Johannes
Einsteinstrasse 4
D-4000 Düsseldorf 13 (DE)

## Beschreibung

Die Erfindung betrifft ein Verfahren zum Verhindern der Bildung schwer entfernbarer Ablagerungen in Abhitze-Rückgewinnungsanlagen von Glasöfen, insbesondere solchen zur Gewinnung von Wasserglas.

Die Herstellung von Glas und von Wasserglas erfolgt in der Regel in Wannenöfen mit Regenerativfeuerung (Siemens-Martin-Öfen). Bei diesem Prozeß verlassen die aus der Verbrennung fossiler Brennstoffe über den Wannenöfen resultierenden Abgase — die üblicherweise Schwefelverbindungen, beispielsweise $SO_2$ oder $SO_3$, enthalten — die Wärmeaustauschkammern der Öfen mit einer Temperatur von 450 bis 700 °C.

Der Wärmeinhalt dieser Abgase wird oftmals in einer nachgeschalteten Abhitze-Rückgewinnungsanlage zur Erzeugung von Dampf verwendet. Im Verlaufe des Wärmeaustausch-Prozesses werden die Abgase, die größere Mengen in vermutlich verdampfter Form vorliegender Feststoffe, wie beispielsweise Alkalimetallsulfate und Alkalimetalldisulfate, enthalten, auf Temperaturen von 200 bis 250 °C abgekühlt. Während des Abkühl-Vorgangs desublimiert ein Großteil der Feststoffe und scheidet sich als festhaftender, stark verkrusteter, massiver Belag auf den Wärmetauscher-Rohren der Dampfkessel ab.

Der kontinuierlich dicker werdende Belag beeinträchtigt bereits nach kurzer Zeit den Wärmeübergang, so daß die Abhitze-Rückgewinnungsanlage mit zunehmend geringer werdendem Wirkungsgrad arbeitet.

Um einen möglichst guten Wärmeübergang in den Wärmetauscher-Rohren der Dampfkessel zu garantieren, ist mindestens eine tägliche Reinigung der Rohrinnenseiten notwendig. Die Beläge, die, beispielsweise im Falle von Wasserglasöfen, hauptsächlich aus Alkalimetallsulfaten und Alkalimetalldisulfaten bestehen und sich durch Desublimation der verdampften Feststoffanteile der Abgase bilden, sind sehr fest, haften gut auf den Rohrflächen und lassen sich mechanisch nur unter grossem Aufwand — oftmals nur unter Verletzung der Rohrwandungen — entfernen. Einige Betreiber reinigen deswegen derartige Anlagen durch Ausspritzen mit heißem Wasser. Wegen der stark sauren Alkalimetall-Disulfate treten nach Durchführung dieses Reinigungsverfahrens jedoch erhebliche Korrosionsprobleme auf.

Lösungen dieser Problematik sind bis heute nicht bekannt geworden.

Überraschend wurde nun gefunden, daß sich die beschriebenen Nachteile, nämlich die Bildung massiver, d. h. stark verkrusteter und festhaftender Salzschichten durch Desublimation bzw. die Schwierigkeiten bei ihrer Entfernung, vermeiden lassen, wenn man dem Abgas vor Eintritt in den Dampfkessel feinkristalline Natriumaluminiumsilicate zusetzt.

Die Erfindung betrifft dementsprechend ein Verfahren zum Verhindern der Bildung schwer entfernbarer Ablagerungen in Abhitze-Rückgewinnungsanlagen von Glasöfen, das dadurch gekennzeichnet ist, daß man

a) den 450 bis 700 °C heißen Abgasen vor dem Eintritt in den Dampfkessel über eine Dosiervorrichtung natürliche und/oder synthetische Natriumaluminiumsilicate mit einer mittleren Teilchengröße von 0,5 bis 50 μm in einer Menge von 0,5 bis 3 kg pro 20 000 Nm³ Abgas und Stunde zusetzt und

b) die anfallenden pulverförmigen Ablagerungen aus den Wärmetauscher-Rohren entfernt.

Geeignet sind alle natürlichen oder synthetischen Natriumaluminiumsilicate mit einer mittleren Teilchengröße von 0,5 bis 50 μm. Bevorzugt im Sinne der Erfindung sind jedoch synthetische Zeolithe ; insbesondere synthetische Zeolithe vom Typ NaA mit einer durchschnittlichen chemischen Zusammensetzung entsprechend der Summenformel

$$1 \pm 0,2 \ Na_2O \cdot 1 \ Al_2O_3 \cdot 2 \pm 0,5 \ SiO_2 \cdot 0 \text{ bis } 6 \ H_2O \ .$$

Das Röntgenbeugungsdiagramm des Zeolith NaA ist beispielsweise in den DE-ASen 10 38 015 und 10 38 017 beschrieben.

Besonders bevorzugt für die Durchführung des erfindungsgemäßen Verfahrens sind Zeolithe mit einer mittleren Teilchengröße zwischen 1 und 10 μm, insbesondere zwischen 3 und 4 μm.

Vermutlich bewirkt der Zusatz der Natriumaluminiumsilicate, daß ihre Teilchen als Kondensationskeime für die Desublimation der bei 450 bis 700 °C noch flüchtigen, bei Abkühlung jedoch in Festform anfallenden Abgasanteile wirken und auf diese Weise ein Zusammensintern der Salze bei der Desublimation verhindern. So bilden beispielsweise Alkalimetallsulfate bzw. Alkalimetalldisulfate, die nach den Verfahren entsprechend dem Stand der Technik in Form sehr fester und kompakter Schichten anfallen, nach Zusatz von Zeolithen zum heißen Abgas lockere Pulver, die sich schwerkraftmäßig ablagern, jedoch in einfacher Weise aus den Wärmetauscher-Rohren entfernt werden können.

Vorzugsweise werden die anfallenden pulverförmigen Ablagerungen durch einen einmaligen Druckluftstoß — periodisch im Abstand von mehreren Tagen — aus den Wärmeaustauscher-Rohren geblasen.

Auch mechanische Methoden, beispielsweise Stahlbürsten, können zur Entfernung dieser Ablagerungen dienen. Im Falle von senkrecht angeordneten Wärmeaustauscher-Rohren können die Ablagerungen auch durch Klopfen, Beschallung (z. B. 40 Hz) oder mit Hilfe eines « Kugelregens » entfernt werden.

Während ohne Zusätze und ohne Reinigung der Wärmetauscher-Rohre nach Ablauf von 48 Stunden die produzierte Dampfmenge infolge verschlechterten Wärmeübergangs um annähernd 25 % von 2,62 t/h auf 1,96 t/h zurückging, wurde ein ungefähr gleicher Rückgang vor Reinigung der Wärmetauscher-Rohre entsprechend dem Verfahren der vorliegenden Erfindung erst nach 120 h beobachtet. Nach der Reinigung der Wärmeaustauscher-Rohre durch einmaliges Ausblasen mit Druckluft wurden wieder die Werte erreicht, die für die gereinigte Anlage kennzeichnend sind. Zu berücksichtigen ist dabei insbesondere, daß die Entfernung der anfallenden pulverförmigen Ablagerungen, durchgeführt werden kann, ohne daß die Wärmetauscher-Anlage dafür stillgelegt werden muß. Eine bessere Auslastung der Anlage ist somit bei Anwendung des Verfahrens gemäß der vorliegenden Erfindung gewährleistet.

Ein weiterer Vorteil des erfindungsgemäßen Verfahrens ist es, daß durch den Zusatz von Natriumaluminiumsilicaten zu den Abgasen der Anteil an sauren Disulfaten im abgeschiedenen Staub zugunsten der Bildung neutraler Sulfate verringert wird. Die Korrosion der Anlagenteile, die in den Verfahren gemäß dem Stand der Technik ein erhebliches Problem darstellt, wird damit weitgehend verhindert. Es wurde nämlich gefunden, daß mit steigender Menge an zudosierten Zeolithen der Anteil von Alkalimetallsulfaten im Staub steigt und der pH-Wert wäßriger Aufschlämmungen der entsprechenden Stäube aus dem Abhitzekessel ebenfalls in den schwächer sauren Bereich verschoben wird.

Im Hinblick auf die angestrebte Bildung leicht entfernbarer, pulverförmiger Ablagerungen hat es sich jedoch als zweckmäßig erwiesen, daß man Natriumaluminiumsilicat in einer Menge von 0,8 bis 1,2 kg pro 20 000 $Nm^3$ Abgas und Stunde zusetzt.

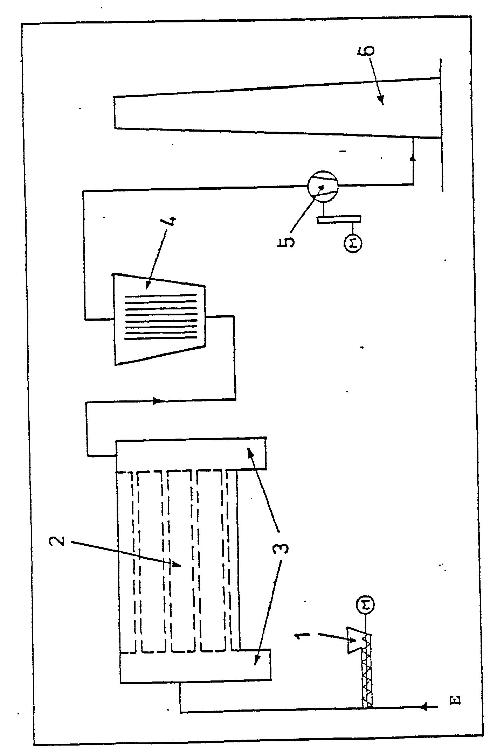

Figur 1 zeigt ein beispielhaftes Fließbild des Verfahrens gemäß der vorliegenden Erfindung. Die Abgase aus den Glas-Wannenöfen treten bei E in die Abhitze-Rückgewinnungsanlage mit einer Temperatur von 450 bis 700 °C in einer Menge von ca. 18 000 bis 20 000 $Nm^3$/h ein. Eine Dosierschnecke (1) dosiert dem Abgasstrom Natriumaluminiumsilicat in einer Menge von 0,5 bis 3 kg/h zu. Die Gase durchströmen die Wärmetauscher-Rohre im Abhitzekessel (2). Durch einen periodisch im Abstand von mehreren Tagen erfolgenden einmaligen Druckluftstoß werden die Alkalimetallsulfat bzw. Alkalimetalldisulfat enthaltenden Zeolith-Stäube in die Staubsammelschächte (3) geblasen. Nach Durchlaufen der Wärmetauscher-Rohre gelangen die Abgase über ein Elektrofilter (4) und einen Ventilator (5) nahezu staubfrei in den Abgaskamin (6).

Die Erfindung wird durch die nachstehenden Beispiele näher erläutert.

Beispiel 1

Der in den Abhitzekessel eintretenden Abgasmenge von 18 360 $Nm^3$/h (feucht), die eine mittlere Temperatur von 550 °C hatte, wurde über eine Dosierschnecke Natriumaluminiumsilicat in einer Menge von 1,0 kg/h zudosiert. An fünf aufeinanderfolgenden Tagen wurde jeweils die durchschnittliche Temperatur des Abgases hinter dem Abhitzekessel sowie die durchschnittlich produzierte Dampfmenge gemessen. Die Werte sind der nachfolgenden Tabelle 1 zu entnehmen.

Tabelle 1

|  | durchschnittl. Temp. hinter Abhitzekessel (°C) | ′durchschnittl. prod. Dampfmenge (t/h) |
|---|---|---|
| 1. Tag | 250 | 3,05 |
| 2. Tag | 255 | 2,99 |
| 3. Tag | 260 | 2,85 |
| 4. Tag | 270 | 2,67 |
| 5. Tag | 285 | 2,41 |

Nach dem fünften Tag erfolgte eine Reinigung der Wärmetauscher-Rohre durch Ausblasen mit Druckluft. Nach der Reinigung wurden wieder die Werte des ersten Tages erreicht.

Eine 10 %ige wäßrige Aufschlämmung des ausgeblasenen Staubes wies einen pH-Wert von 2,8 auf. Analytisch wurden im Staub bestimmt :

$Na_2SO_4$ : 13,9 Gew.-%
$Na_2S_2O_7$ : 51,2 Gew.-%
(Rest : Natriumaluminiumsilicat, $SiO_2$, $Al_2O_3$, $Fe_2O_3$).

## Beispiel 2

Abgasmenge und Kesseleintrittstemperatur entsprachen den in Beispiel 1 angegebenen Werten. Den eintretenden Abgasen wurde Natriumaluminiumsilicat in einer Menge von 1,2 kg/h zudosiert. Die im Verlaufe von fünf Tagen erreichten Kesselaustrittstemperaturen sowie die durchschnittlich produzierten Dampfmengen sind der nachfolgenden Tabelle 2 zu entnehmen.

Tabelle 2

|  | durchschnittl. Temp. hinter Abhitzekessel (°C) | durchschnittl. prod. Dampfmenge (t/h) |
|---|---|---|
| 1. Tag | 240 | 3,11 |
| 2. Tag | 255 | 2,95 |
| 3. Tag | 260 | 2,87 |
| 4. Tag | 275 | 2,62 |
| 5. Tag | 290 | 2,31 |

Nach dem fünften Tag erfolgte eine Reinigung der Rohre durch Ausblasen mit Druckluft. Nach der Reinigung wurden wieder die Werte des ersten Tages erreicht.

Eine 10 %ige wäßrige Aufschlämmung des ausgeblasenen Staubes hatte einen pH-Wert von 4,9. Analytisch wurden im Staub bestimmt :

$Na_2SO_4$ : 49,8 Gew.-%
$Na_2S_2O_7$ : 5,5 Gew.-%
(Rest : Natriumaluminiumsilicat, $SiO_2$, $Al_2O_3$, $Fe_2O_3$).

## Vergleichsbeispiel

Abgasmenge und Kesseleintrittstemperatur entsprachen den Werten von Beispiel 1. Es wurde kein Natriumaluminiumsilicat zudosiert.

Die Werte für die Kesselaustrittstemperatur des Abgases sowie die durchschnittlich produzierte Dampfmenge gibt die nachfolgende Tabelle 3 wieder.

Tabelle 3

|  | durchschnittl. Temp. hinter Abhitzekessel (°C) | durchschnittl. prod. Dampfmenge (t/h) |
|---|---|---|
| 1. Tag | 265 | 2,62 |
| 2. Tag | 280 | 1,96 |

Nach zwei Tagen mußte eine Reinigung der Rohre mit einer Stahlbürste erfolgen, da sich die gebildeten Feststoffkrusten durch Ausblasen nicht entfernen ließen.

Der pH-Wert einer 10 %igen Aufschlämmung der entfernten Feststoffe betrug 1,2. Analytisch wurde folgende Zusammensetzung bestimmt :

$Na_2SO_4$ : 3,2 Gew.-%
$Na_2S_2O_7$ : 81,8 Gew.-%

## Beispiel 3

In einer Versuchsserie wurden gleichen in den Abhitzekessel eintretenden Gasmengen unterschiedliche Mengen synthetischer Natriumaluminiumsilicate (Zeolith NaA-HAB A 40, Fa. Degussa AG) zudosiert. Es wurde der pH-Wert 10 %iger wäßriger Aufschlämmungen der entsprechenden Stäube gemessen sowie analytisch der Gehalt an Natriumsulfat bzw. Natriumdisulfat bestimmt. Die Werte sind der nachfolgenden Tabelle 4 zu entnehmen.

Tabelle 4

| Na-Al-Silikat (kg/Std.) | pH-Wert | $Na_2SO_4$ (Gew.-%) | $Na_2S_2O_7$ (Gew.-%) |
|---|---|---|---|
| 0 | 1,2 | 3,2 | 81,8 |
| 1,0 | 2,8 | 13,9 | 51,2 |
| 1,2 | 4,9 | 49,8 | 5,5 |

Ergebnis :

Mit steigender Menge des zudosierten Natriumaluminiumsilicats verschiebt sich der pH-Wert der Stäube zunehmend in den weniger sauren Bereich. Außerdem wird der Anteil von neutralem Natriumsulfat zu Lasten des stark sauren Natriumdisulfats erhöht, wodurch die Gefahr einer Korrosion von Anlagenteilen verringert wird.

### Patentansprüche

1. Verfahren zum Verhindern der Bildung schwer entfernbarer Ablagerungen in Abhitze-Rückgewinnungsanlagen von Glasöfen, insbesondere vom Wasserglasöfen, dadurch gekennzeichnet, daß man
a) den 450 bis 700 °C heißen Abgasen vor dem Eintritt in den Dampfkessel über eine Dosiervorrichtung natürliche und/oder synthetische Natriumaluminiumsilicate mit einer mittleren Teilchengröße von 0,5 bis 50 μm in einer Menge von 0,5 bis 3 kg pro 20 000 Nm³ Abgas und Stunde zusetzt und
b) die anfallenden pulverförmigen Ablagerungen aus den Wärmetauscher-Rohren entfernt.
2. Verfahren nach Anspruch 1, dadurch gekennzeichnet, daß man als Natriumaluminiumsilicat synthetischen Zeolith verwendet.
3. Verfahren nach Ansprüchen 1 und 2, dadurch gekennzeichnet, daß man als Natriumaluminiumsilicat synthetischen Zeolith vom Typ NaA verwendet.
4. Verfahren nach Ansprüchen 1 bis 3, dadurch gekennzeichnet, daß man Natriumaluminiumsilicate mit einer mittleren Teilchengröße zwischen 1 und 10 μm, insbesondere mit einer mittleren Teilchengröße zwischen 3 und 4 μm verwendet.
5. Verfahren nach Ansprüchen 1 bis 4, dadurch gekennzeichnet, daß man Natriumaluminiumsilicat in einer Menge von 0,8 bis 1,2 kg pro 20 000 Nm³ Abgas und Stunde zusetzt.
6. Verfahren nach Ansprüchen 1 bis 5, dadurch gekennzeichnet, daß man die anfallenden pulverförmigen Ablagerungen durch einen einmaligen Druckluftstoß periodisch im Abstand von mehreren Tagen aus den Wärmeaustauscher-Rohren ausbläst.

### Claims

1. A method of preventing the formation of difficulty removable deposits in waste-heat recovery plants of glass furnaces, particularly waterglass furnaces, characterized in that
a) natural and/or synthetic sodium aluminium silicates having an average particle size of from 0.5 to 50 μm are introduced via a metering unit into the waste gases having a temperature of 450 to 700 °C before they enter the steam boiler in quantities of from 0.5 to 3 kg per 20,000 Nm³ of waste gas per hour and
b) the powder-form deposits accumulating are removed from the heat-exchanger tubes.
2. A method as claimed in Claim 1, characterized in that synthetic zeolite is used as the sodium aluminium silicate.
3. A method as claimed in Claims 1 and 2, characterized in that synthetic zeolite of the NaA type is used as the sodium aluminium silicate.

4. A method as claimed in Claims 1 to 3, characterized in that sodium aluminium silicates having an average particle size of from 1 to 10 μm and more particularly from 3 to 4 μm are used.

5. A method as claimed in Claims 1 to 4, characterized in that sodium aluminium silicate is added in a quantity of from 0.8 to 1.2 kg per 20,000 Nm$^3$ of waste gas per hour.

6. A process as claimed in Claims 1 to 5, characterized in that the powder-form deposits accumulating are blown out of the heat-exchanger tubes periodically at intervals of several days by a single blast of compressed air.

**Revendications**

1. Procédé pour éviter la formation de dépôts difficiles à éliminer dans les installations de récupération à chaleur perdue de fours à verre, en particulier de fours à verre soluble, caractérisé en ce que :

a) on ajoute aux gaz de combustion chauds portés à 450-700° avant l'entrée dans la chaudière de vapeur par l'intermédiaire d'un dispositif d'addition fractionnée, un aluminosilicate de sodium naturel et/ou synthétique ayant une taille moyenne de particules de 0,5 à 50 μm en quantité allant de 0,5 à 3 kg pour 20 000 Nm$^3$ de gaz de combustion et par heure, et

b) on élimine les dépôts pulvérulents qui sont survenus en dehors des tubes de l'échangeur de chaleur.

2. Procédé selon la revendication 1, caractérisé en ce que l'on utilise comme aluminosilicate de sodium une zéolite synthétique.

3. Procédé selon les revendications 1 et 2, caractérisé en ce que l'on utilise comme aluminosilicate de sodium une zéolite synthétique du type NaA.

4. Procédé selon les revendications 1 à 3, caractérisé en ce que l'on utilise un aluminosilicate de sodium ayant une taille moyenne de particules entre 1 et 10 μm, en particulier ayant une taille moyenne de particules entre 3 et 4 μm.

5. Procédé selon les revendications 1 à 4, caractérisé en ce que l'on ajoute l'aluminosilicate de sodium en quantité allant de 0,8 à 1,2 kg pour 20 000 Nm$^3$ de gaz de combustion et par heure.

6. Procédé selon les revendications 1 à 5, caractérisé en ce que l'on expulse par soufflage les dépôts pulvérulents qui sont survenus par une poussée, en une fois, d'air comprimé périodiquement dans l'intervalle de plusieurs jours, des tubes de l'échangeur de chaleur.